# EUROPÄISCHE PATENTSCHRIFT

(11) **EP 4 052 994 B1**
(45) Veröffentlichungstag und Bekanntmachung des Hinweises auf die Patenterteilung: **08.11.2023**
(21) Anmeldenummer: 22020085.1
(22) Anmeldetag: 01.03.2022
(51) Int. Cl.: B62D 13/04, B62D 13/02

(54) **HYDRAULISCH GELENKTES TRANSPORTFAHRZEUG, VORZUGSWEISE MIT VARIABLER BREITE UND SPURWEITE**
HYDRAULICALLY STEERED TRANSPORT VEHICLE, PREFERABLY WITH VARIABLE WIDTH AND TRACK WIDTH
VÉHICULE DE TRANSPORT À DIRECTION HYDRAULIQUE, DE PRÉFÉRENCE À LARGEUR ET À ÉCARTEMENT DES VOIES VARIABLES

(30) Priorität: 01.03.2021 DE 102021001083; 01.03.2021 DE 202021000777 U
(43) Veröffentlichungstag der Anmeldung: 07.09.2022
(73) Patentinhaber: Scheuerle Fahrzeugfabrik GmbH, 74629 Pfedelbach (DE)
(72) Erfinder: Mugele, Ulrich, 74629 Pfedelbach (DE); Vogtmann, Matthias, 74629 Pfedelbach (DE); Singer, Christian, 74629 Pfedelbach (DE); Hauf, Reinhard, 74629 Pfedelbach (DE)
(74) Vertreter: Ullrich & Naumann PartG mbB

(56) Entgegenhaltungen:
- BE-B1- 1 021 979
- DE-U1- 9 317 407
- NL-A- 9 400 197

## Beschreibung

Die Erfindung betrifft ein hydraulisch gelenktes Transportfahrzeug, insbesondere mit variabler Breite und Spurweite, welches ein Fahrgestell mit mindestens zwei Lenkachsen besitzt, wobei das Fahrgestell zwei Fahrgestellteile umfasst, die jeweils eine Reihe von hintereinander angeordneten Fahrwerken jeweils mit mindestens einem Rad-Drehgestell tragen, welche vorzugsweise quer zu einer vertikalen Längsmittelebene des Transportfahrzeugs verstellbar sind, wobei an einer Querseite des Transportfahrzeugs eine Kupplungsvorrichtung mit einem verschwenkbaren Kupplungselement angeordnet ist, über welches das Transportfahrzeug an ein das Transportfahrzeug bewegendes Zug- oder Schubfahrzeug ankoppelbar ist.

Die DE 10 2012 024 247 B4 der Anmelderin beschreibt ein den Oberbegriff des Anspruchs 1 zeigendes, gattungsgemäßes Transportfahrzeug mit variabler Breite und Spurweite, welches ein Fahrgestell mit mindestens einer Lenkachse aufweist. Das Fahrgestell umfasst zwei Fahrgestellteile, die jeweils eine Reihe von hintereinander angeordneten Rad-Drehgestellen tragen und quer zu einer vertikalen Längsmittelebene des Transportfahrzeugs verstellbar sind. Die Rad-Drehgestelle eines jeden Fahrgestellteils sind durch Längsspurstangen verbunden. Zwischen den beiden Reihen von Rad-Drehgestellen ist nur eine einzige längenverstellbare Querspurstange angeordnet, die zwei Rad-Drehgestelle von der oder einer der Lenkachsen verbindet und deren Länge um ein dem Maß der Vergrößerung oder Verkleinerung der Breite und Spurweite entsprechendes Maß verstellbar ist. Die Querspurstange verbindet zwei Lenkhebel, die jeweils zwischen zwei benachbarten Rad-Drehgestellen an einem der beiden Fahrgestellteile angelenkt sind. Zur Verstellung der Breite und der Spurweite des aus der vorgenannten Druckschrift bekannten Transportfahrzeugs ist es erforderlich, die Querspurstange längenverstellbar auszubilden und bei jeder Veränderung der Breite des bekannten Fahrzeugs deren Länge anzupassen.

Aus der die Priorität des vorgenannten Patents in Anspruch nehmenden DE 20 2013 011 633 U1 ist es des Weiteren bekannt, bei dem vorstehend beschriebenen Transportfahrzeug eine Zugdeichsel zu verwenden, die mit dem Fahrgestell des Transportfahrzeugs gekuppelt ist. Zu diesem Zweck umfasst die Zugdeichsel einen Kupplungsteil, der starr mit einem Kupplungselement des Fahrgestells verbindbar ist. Dieser Kupplungsteil besitzt zwei Elemente, die in Bezug zueinander um eine vertikale Schwenkachse verschwenkbar sind, sowie vier Hydraulikzylinder, die beiderseits der Längsmittelebene des Transportfahrzeugs paarweise zwischen den vorgenannten Elementen angeordnet sind. Das erste Element dieser beiden vorgenannten Elemente ist in Bezug zu einem Deichselteil der Zugdeichsel um eine zum Untergrund parallele Achse schwenkbar. Das zweite der beiden vorgenannten Elemente umfasst eine vertikale Platte, die sich mit der Stirnfläche des Kupplungselements des Fahrgestells in Anlage bringen und durch Verschrauben mit dem Kupplungselement kuppeln lässt. Die Hydraulikzylinder weisen jeweils eine am ersten Element angelenkte Kolbenstange und ein am zweiten Element angelenktes Zylinderrohr auf. Nach dem Kuppeln werden die Hydraulikzylinder hydraulisch mit einem Hydraulik-Lenkkreislauf von Lenkachsen des Transportfahrzeugs verbunden, um auf diese Weise auch zwischen den beiden vorgenannten Elementen für einen gewünschten Einschlagwinkel der Deichsel zu sorgen.

Aus der US 4,221,398 A ist ein Transportfahrzeug in Form eines Deichselanhängers und eines Tiefladers mit mehreren Lenkachsen bekannt, dessen Breite und Spurweite bei Bedarf vergrößert bzw. verkleinert werden können, indem zwei Fahrgestellteile, die jeweils eine Reihe von Rad-Drehgestellen tragen, quer zur Fahrtrichtung bzw. zu einer vertikalen Längsmittelebene des Transportfahrzeugs auseinander bzw. zusammenbewegt werden. Die Rad-Drehgestelle jeder Lenkachse werden dort unabhängig voneinander mittels getrennter Lenkzylinder gelenkt, die in jedem der beiden Fahrgestellteile angeordnet sind. Dadurch werden jedoch zum einen übermäßig viele Lenkzylinder für die Lenkung benötigt und zum anderen kann nicht gewährleistet werden, dass beim Lenken der Lenkwinkel der beiden Rad-Drehgestelle jeder Lenkachse und damit die Einschlagwinkel der zugehörigen Räder oder Radpaare identisch sind.

Zur Lenkung der beiden Rad-Drehgestelle der beiden Fahrgestellteile sind zwei Steuerzylinder vorgesehen, deren kolbenseitiges Ende jeweils an dem entsprechenden Fahrgestellteil und deren ringseitiges Ende an einer schwenkbar an einem die beiden Fahrgestellteile verbindenden Querträger angeordnet ist. Eine Verschwenkbewegung der Zuggabel bewirkt somit, dass ein Zylinder eines der beiden Steuerzylinder ausgefahren und der anderen Zylinder eingefahren wird. Die beiden Steuerzylinder sind jeweils mit korrespondierenden Lenkzylindern über Hydraulikleitungen verbunden. Ein kolbenseitiges Ende eines jeden der beiden Lenkzylinders ist an dem entsprechenden Fahrgestellteil angelenkt und ein ringseitiges Ende dieser Lenkzylinder ist jeweils mit einem ersten Ende eines Lenkhebels verbunden, wobei jeder dieser beiden Lenkhebel über sein zweites Ende mit der entsprechenden Rad-Drehanordnung verbunden ist. Eine erste Hydraulikleitung des in Fahrtrichtung linken Steuerzylinders führt vom kolbenseitigen Ausgang dieses Zylinders zu einem kolbenseitigen Eingang des in Fahrtrichtung rechten Lenkzylinders. In entsprechender Art und Weise ist ein kolbenseitiger Ausgang des rechten Steuerzylinders mit einem kolbenseitigen Eingang des linken Lenkzylinders verbunden. Eine weitere Hydraulikleitung führt vom ringseitigen Ausgang des linken Lenkzylinders zum ringseitigen Eingang des rechten Lenkzylinders. Das bekannte Transportfahrzeug weist außer der vorstehend beschriebenen Lenkachse noch eine mittlere Lenkachse und eine hintere Lenkachse mit jeweils einer Rad-Drehanordnung auf. Der Lenkhebel eines jeden Fahrgestellteils der vorderen Lenkachse ist jeweils über eine Längsspurstange mit einem ersten Ende eines Lenkhebels der mittleren Lenkachse verbunden und die jeweils zweiten Enden dieser Lenkhebel sind über eine mechanische Verbindung mit der entsprechenden Rad-Drehanordnung gekoppelt. Jeweils eine dritte Längsspurstange führt vom jeweils zweiten dieser beiden Lenkhebel zu einem ersten Ende der beiden Hebel der Lenkachse, welche wiederum über entsprechende Spurstangen mechanisch mit den Rad-Drehanordnungen der hinteren Lenkachse verbunden sind. Jeweils ein zweites Ende der beiden Lenkhebel der hinteren Lenkachse ist mit einer Kolbenstange von weiteren Lenkzylindern verbunden, deren jeweils anderes Ende mit einem hinteren Querträger verbunden ist. Eine weitere Hydraulikleitung führt vom ringseitigen Ausgang des linken Steuerzylinders zum ringseitigen Eingang des rechten hinteren Lenkzylinders und in entsprechender Art und Weise ist ein ringseitiger Ausgang des vorderen rechten Steuerzylinders mit einem ringseitigen Eingang des linken hinteren Lenkzylinders verbunden. Eine weitere Hydraulikleitung verbindet die kolbenseitigen Ausgänge dieser beiden Lenkzylinder. Nachteilig bei dieser bekannten Lenkung ist, dass mit den in der vorgenannten Druckschrift beschriebenen Maßnahmen nur ein Lenkkreis ausgebildet werden kann, welcher auch nur eine geringe Lenkkraft erzeugen kann.

Es ist daher Aufgabe der vorliegenden Erfindung, ein Transportfahrzeug der eingangs genannten Art derart weiterzubilden, dass bei einer einfachen Ausbildung des erfindungsgemäßen Transportfahrzeugs eine Lenkung mit mindestens zwei voneinander getrennten Lenkkreisen mit einer höheren Lenkkraft gegeben ist.

Diese Aufgabe wird durch das erfindungsgemäße Transportfahrzeug dadurch gelöst, dass die Kupplungsvorrichtung mindestens vier Steuerzylinder besitzt, wobei mindestens zwei Steuerzylinder mit ihrem ringseitigen Ende über Kolbenstangen an einer ersten Seite des verschwenkbaren Kupplungselements und mit ihrem kolbenseitigen Ende mit der Kupplungsvorrichtung und mindestens zwei Steuerzylinder mit ihrem ringseitigen Ende über Kolbenstangen mit einer zweiten Seite des verschwenkbaren Kupplungselements und mit ihrem kolbenseitigen Ende mit der Kupplungsvorrichtung verbunden sind, dass die ersten Fahrwerke und die zweiten Fahrwerke jeweils einen Lenkzylinder besitzen, wobei ein erster Lenkzylinder an einer ersten Rad-Drehanordnung und ein zweiter Lenkzylinder jeweils an einer zweiten Rad-Drehanordnung angelenkt ist, derart, dass jeweils ein kolbenseitiges Ende des entsprechenden Lenkzylinders am Fahrgestell verbunden ist und ein ringseitiges Ende über eine entsprechende Kolbenstange auf das Lenkelement der entsprechenden Rad-Drehanordnung einwirkt, und dass jeweils eine kolbenseitige Anschlussöffnung eines Steuerzylinders mit einer kolbenseitigen Anschlussöffnung des diesem Steuerzylinder zugeordneten Lenkzylinders und eine ringseitige Anschlussöffnung dieses Lenkzylinders mit einer ringseitigen Anschlussöffnung dieses Steuerzylinders über entsprechende Hydraulikleitungen verbunden ist.

Die erfindungsgemäßen Maßnahmen besitzen den Vorteil, dass hierdurch eine Lenkvorrichtung für ein Transportfahrzeug mit mindestens zwei aktiven Lenkkreisen geschaffen wird, welches sich auch dadurch auszeichnet, dass in einfacher Art und Weise eine erhöhte Lenkkraft erzielt wird. Die erfindungsgemäßen Maßnahmen bewirken, dass die kolbenseitigen Ausgänge der Steuerzylinder immer mit den kolbenseitigen Eingängen der korrespondierenden Lenkzylinder verbunden sind; die Lenkung der aktiven Fahrwerke erfolgt somit über die Kolbenfläche der Steuerzylinder und der Lenkzylinder. Dadurch wird in vorteilhafter Art und Weise die maximal aufzubringende hydraulische und somit auch mechanische Lenkkraft erzielt. Von Vorteil hierbei ist, dass die Ringflächen der Steuerzylinder und die Ringflächen der Lenkzylinder verbunden sind, was in einer Stabilisierung und Synchronisierung des jeweiligen Lenkkreises resultiert. Ein weiterer Vorteil ist, dass durch die erfindungsgemäßen Maßnahmen eine Zweikreislenkung ausgebildet wird, welche sich durch eine erhöhte Lenksicherheit auszeichnet: Wird z. B. die kolbenseitige hydraulische Verbindung zwischen einem Lenkzylinder und einem Steuerzylinder unterbrochen, so wird die Lenkeinheit durch die ringseitige hydraulische Verbindung weiterhin gehalten. Einem Ausbrechen des Transportfahrzeugs durch einen derartigen Defekt wird daher wirksam entgegengewirkt. Das erfindungsgemäße Transportfahrzeug darf daher (nach den zur Zeit in Deutschland geltenden gesetzlichen Vorschriften) mit einer Geschwindigkeit bis zu 80 km/h gefahren werden. Ein weiterer Vorteil ist, dass die Kupplungsvorrichtung nicht direkt an dem Transportfahrzeug angebaut und mechanisch mit der die Fahrwerke dieses Transportfahrzeugs bewegenden Lenkung verbunden sein muss. Durch das beschriebene hydraulische Ansteuern der Lenkung können zwischen der Kupplungseinrichtung und dem Fahrwerk des erfindungsgemäßen Transportfahrzeugs in vorteilhafter Art und Weise z. B. Adapter oder Längsträger ohne integrierte Lenkung eingekuppelt werden und mittels geeigneter Hydraulikleitungen überbrückt werden, um auf die Lenkungshydraulik des Transportfahrzeugs zu gelangen. Ein weiterer Vorteil der erfindungsgemäßen Maßnahmen ist, dass die erfindungsgemäße Lenkvorrichtung in vorteilhafter Art und Weise für Transportfahrzeuge mit fixer und insbesondere für Transportfahrzeuge mit variabler Breite geeignet ist.

Eine vorteilhafte Weiterbildung der Erfindung sieht vor, dass mindestens ein an einer ersten Seite des Fahrgestells angeordneter Steuerzylinder der Lenkung des erfindungsgemäßen Transportfahrzeugs mit einem an der gleichen Seite des Fahrgestells angeordneten Lenkzylinder hydraulisch verbunden ist.

Eine weitere vorteilhafte Weiterbildung der Erfindung sieht vor, dass das erfindungsgemäße Transportfahrzeug in seiner Breite und/oder seiner Spurweite variabel ist. Gemäß einer vorteilhaften Weiterbildung der Erfindung wird dies dadurch erreicht, dass die beiden Fahrgestellteile in Querrichtung zueinander verschoben werden können.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, welches im Folgenden anhand der Figuren beschrieben wird. Es zeigen:
- Figur 1: eine perspektivische Darstellung eines Ausführungsbeispiels eines Transportfahrzeugs,
- Figur 2: eine Draufsicht auf das Ausführungsbeispiel der Figur 1,
- Figur 3: eine Draufsicht auf den vorderen Teil des Transportfahrzeugs der Figuren 1 und 2 ohne Transportfläche in einer ersten Stellung einer Zuggabel,
- Figur 4: eine Draufsicht auf den vorderen Teil des Transportfahrzeugs der Figuren 1 und 2 ohne Transportfläche in einer zweiten Stellung der Zuggabel,
- Figur 5: eine perspektivische Ansicht eines Zuggabelkupplungselements,
- Figur 6: eine Draufsicht auf das Zuggabelkupplungselement der Figur 5,
- Figur 7: eine Vorderansicht des Zuggabelkupplungselements der Figur 5,
- Figur 8: eine Seitenansicht des Zuggabelkupplungselements,
- Figuren 9 und 10: eine schematische Darstellung einer ersten Variante der beiden Lenckreisläufe des Transportfahrzeugs,
- Figur 11: eine schematische Darstellung einer zweiten Variante der beiden Lenkkreisläufe des Transportfahrzeugs, und
- Figur 12: eine schematische Darstellung der Lenkanordnung bei einem verbreiterten Transportfahrzeug.

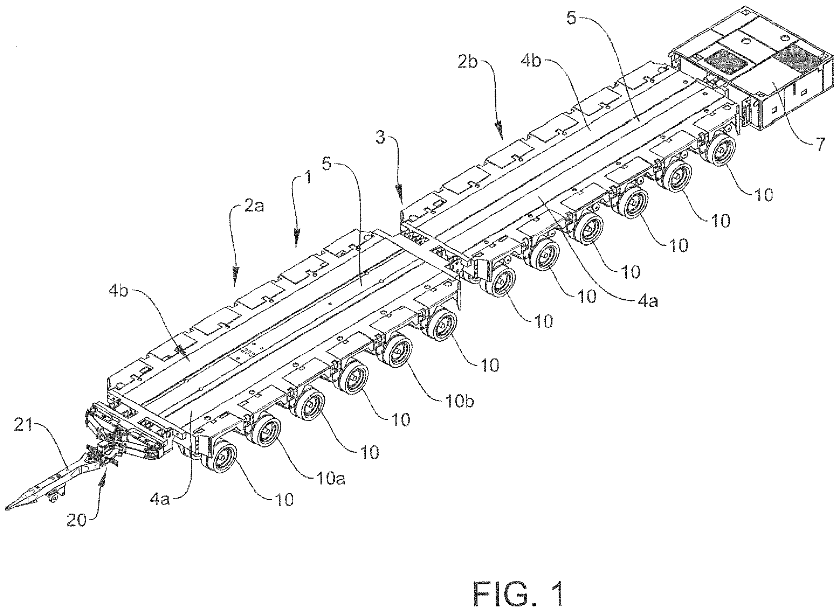

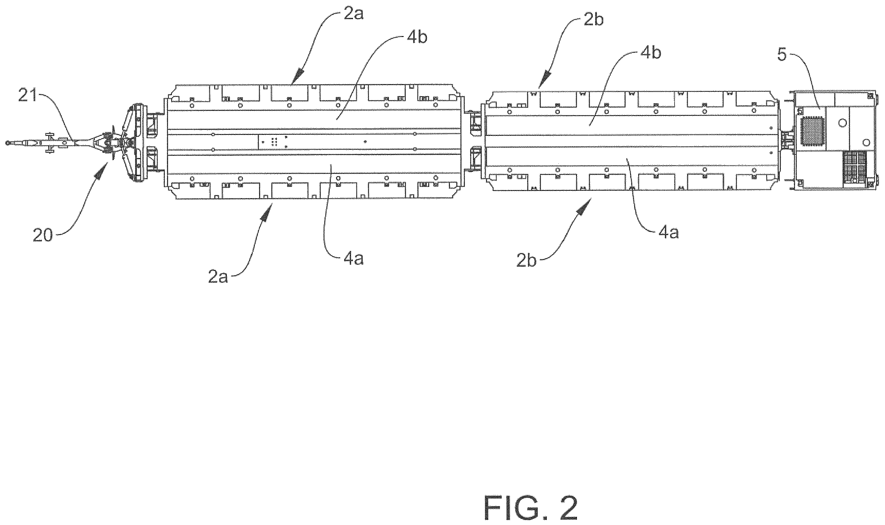

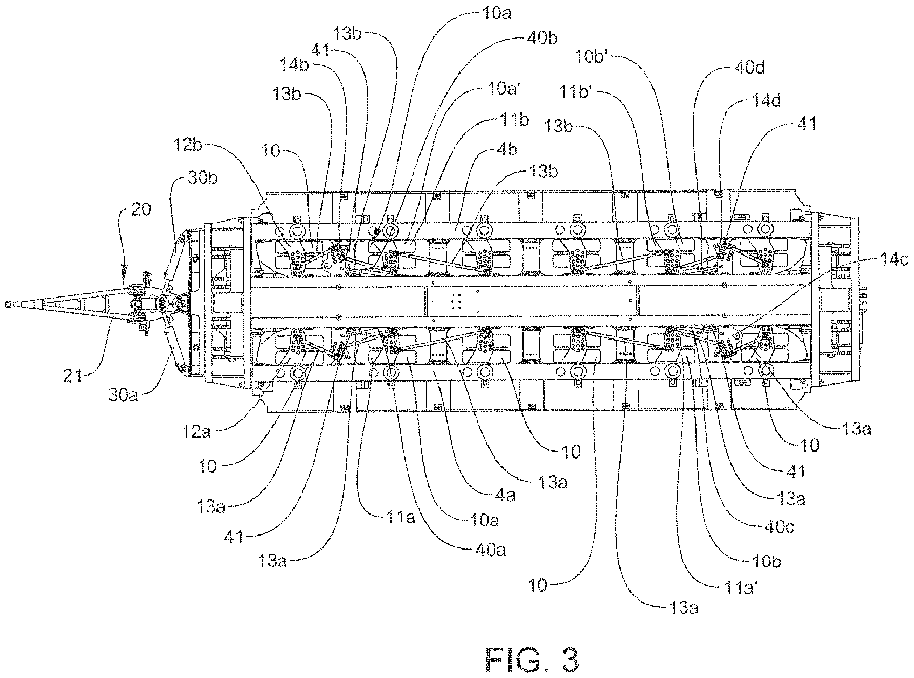

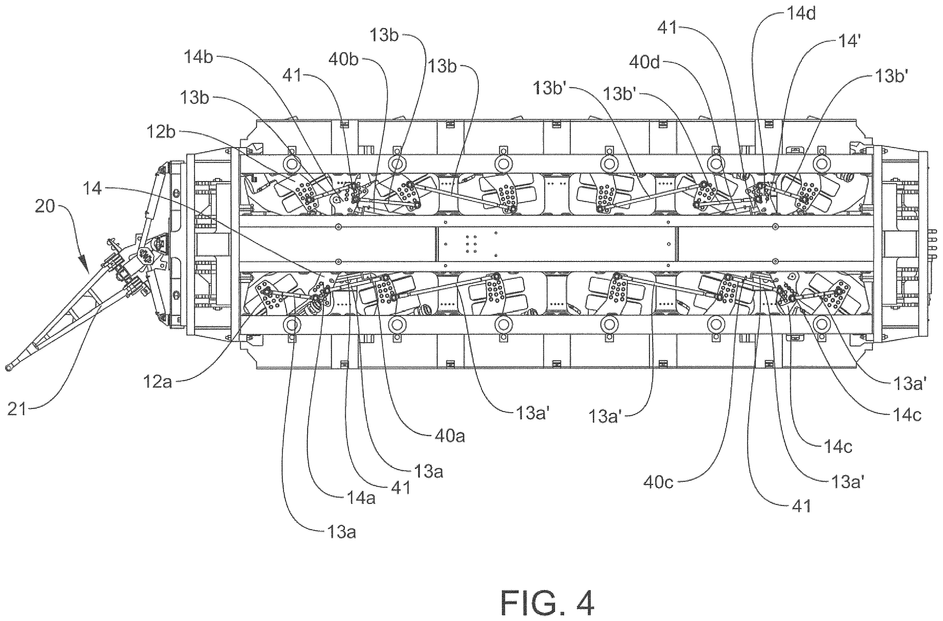

In den Figuren 1 bis 4 ist ein Ausführungsbeispiel eines allgemein mit 1 bezeichneten Transportfahrzeugs dargestellt, welches zwei mechanisch miteinander gekoppelte Fahrzeugmodule 2a und 2b besitzt. Jedes der beiden Fahrzeugmodule 2a, 2b weist eine Anzahl von Fahrwerken 10 auf, wobei mindestens zwei und als - aktive - Fahrwerke 10a, 10a' und 10b, 10b` ausgebildet sind. Dem Fachmann ist aus nachfolgender Beschreibung ersichtlich, dass die nachfolgend erörterte Lenkung nicht auf die in den Figuren 1 und 2 gezeigte Konfiguration des Transportfahrzeugs 1 mit zwei mechanisch aneinander gekoppelten Fahrzeugmodulen 2a und 2b beschränkt ist. Vielmehr ist es auch möglich, mehr als zwei Fahrzeugmodule 2a, 2b oder - wie in den Figuren 3 und 4 dargestellt - nur ein einziges Fahrzeugmodul 2a vorzusehen. Es ist nur erforderlich, dass das Gesamt-Transportfahr-zeug 1 mindestens zwei aktiv gelenkte Fahrwerke 10a, 10a' und 10b, 10b` besitzt, wobei es nicht erforderlich ist, dass die aktiv gelenkten Fahrwerke 10a, 10a`, 10b, 10b' im gleichen Fahrzeugmodul 2a, 2b angeordnet sind. Im beschriebenen Ausführungsbeispiel wird exemplarisch davon ausgegangen, dass die ersten Fahrwerke 10a und 10a' des ersten Fahrzeugmoduls 2a die oder eine der vorderen Achslinien und die zweiten aktiv gelenkten Fahrwerke 10b, 10b' die oder eine der hinteren Achslinien des ersten Fahrzeugmoduls 2a sind. Natürlich ist es auch möglich, dass die aktiv gelenkten Fahrwerke 10b, 10b` eine der Achslinien des zweiten Fahrzeugmoduls 2b ist, z. B. die oder eine der hinteren Achslinien des zweiten Fahrzeugmoduls 2b.

Jedes der beiden Fahrzeugmodule 2a, 2b ist vorzugsweise in seiner Breite und somit Spurweite verstellbar, wobei auch hier wiederum festzuhalten ist, dass diese Verstellbarkeit mindestens eines der beiden Fahrzeugmodule 2a, 2b zwar vorteilhaft, aber nicht zwingend erforderlich ist. Im folgenden wird davon ausgegangen, dass die Fahrzeugmodule 2a, 2b eine variable Breite und Spurweite aufweisen. Dem Fachmann ist es ohne Weiteres ersichtlich, welche Änderungen er vorzunehmen hat, wenn dieser Vorteil nicht realisiert werden soll, d. h. wenn eines oder mehrere Fahrzeugmodule 2a, 2b hinsichtlich ihrer Breite und Spurweite nicht-variabel ausgebildet sind.

Hierzu ist vorgesehen, dass ein Fahrgestell 3 eines oder beider Fahrzeugmodule 2a, 2b ein erstes und ein zweites Fahrgestellteil 4a und 4b aufweist, welche in an und für sich bekannter Art und Weise hinsichtlich ihres Abstands veränderbar sind, so dass durch eine entsprechende Schiebebewegung in einer quer zur Fahrzeuglängsrichtung verlaufenden Richtung der Abstand der beiden Fahrgestellteile 4a, 4b zueinander verändert werden kann. Dies kann z. B. durch Querträger, wie in der DE 10 2012 024 247 B4 beschrieben, oder durch eine Scherenverbindung, wie z. B. in der DE 10 2014 009 036 B4 erläutert, geschehen. Beim beschriebenen Ausführungsbeispiel ist vorgesehen, dass zwischen die beiden Fahrgestellteile 4a, 4b ein Zwischenträger 5 entsprechender Breite auswechselbar eingesetzt ist. Dieser Zwischenträger 5 besitzt auch den Vorteil, dass er das Fahrgestell 3 verstärkt und dadurch für eine erheblich höhere Steifigkeit desselben sorgt. Hierdurch ist es in vorteilhafter Art und Weise möglich, mit dem beschriebenen Transportfahrzeug 1 höhere Nutzlasten zu transportieren als dies bei einem eine derartige Konstruktion nicht aufweisenden Fahrzeug der Fall ist.

An einer vorderen Querseite des Fahrgestells 3 des Fahrzeugmoduls 2a ist eine Kupplungsvorrichtung 20 - hier eine Zuggabelkupplungsvorrichtung - mit einem Lenkelement, hier mit einer Zuggabel 21, vorgesehen, welche nachstehend noch im Detail erörtert wird. An einer hinteren Querseite des zweiten Fahrzeugmoduls 2b ist eine Antriebseinrichtung 7 angekuppelt, welche ebenfalls bekannt ist und daher nicht mehr näher erläutert wird.

Die Figuren 3 und 4 zeigen aus Gründen einer übersichtlicheren Darstellung nurmehr das erste Fahrzeugmodul 2a, das zweite Fahrzeugmodul 2b ist entsprechend aufgebaut. Man erkennt aus den Figuren 3 und 4, dass die beiden aktiven Fahrwerke 10a, 10a' sowie 10b und 10b` sowie auch sämtliche weiteren Fahrwerke 10 - passiv - lenkbar ausgebildet sind. Jedes Fahrwerk 10, 10a, 10a', 10b, 10b' weist jeweils eine Rad-Drehanordnung 11a, 11a' und 11b, 11b' auf, wobei die ersten Rad-Drehanordnungen 11a, 11b drehbar im ersten Fahrgestellteil 4a und die zweiten Rad-Drehanordnungen 11a', 11b' im zweiten Fahrgestellteil 4b angeordnet ist. Die Ausgestaltung derartiger Rad-Drehanordnungen 11a-11b' ist bekannt und muss daher nicht mehr näher beschrieben werden. Jede Rad-Drehanordnung 11a, 11b bzw. 11a', 11b' besitzt jeweils ein vorzugsweise als Lenkhebel ausgebildetes Lenkelement 12a, bzw. 12b, wobei die Lenkelemente 12a sowie die Lenkelemente 12b des ersten bzw. des zweiten Fahrgestellteils 4a bzw. 4b jeweils durch Längsspurstangen 13a bzw. 13b miteinander verbunden sind. Eine derartige Konstruktion ist in der DE 10 2012 024 247 B4 beschrieben und muss daher ebenfalls nicht im Detail erläutert werden.

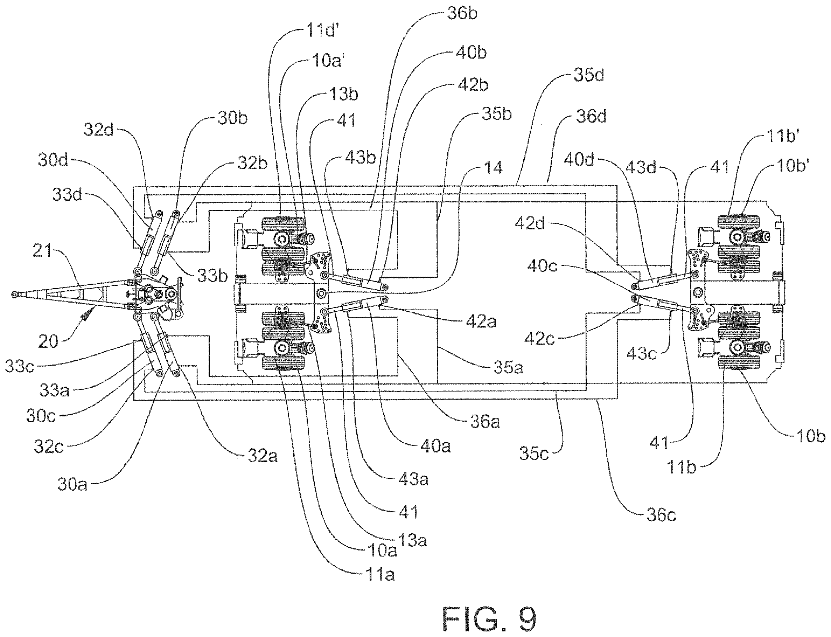

Um nun eine Schwenkbewegung der Zuggabel 21 in eine Schwenk- und somit Lenkbewegung der Rad-Drehanordnungen 11a-11b' umzusetzen, ist beim beschriebenen Ausführungsbeispiel vorgesehen, dass - wie nachstehend beschrieben - die Zuggabel 21 Steuerzylinder 30a-30d der Kupplungsvorrichtung 20 beaufschlagt und diese Steuerzylinder 30a-30d über in den Figuren 9 bis 11 gezeigten und weiter unten noch näher beschriebenen Hydraulikleitungen mit an den Fahrgestellteilen 4a, 4b angelenkten Lenkzylindern 40a-40d verbunden sind. Die Steuerzylinder 30a-30d werden nachstehend anhand der Beschreibung der Kupplungsvorrichtung 20 noch erläutert. Wie aus den Figuren 3 und 4 ersichtlich, greift der am kolbenseitigen Ende am ersten Fahrgestellteil 4a angelenkte erste Lenkzylinder 40a ringseitig an einer ersten Seite eines hier als Lenkplatte ausgeführten ersten Lenkelements 14a einer Lenkeinheit 14 an, welches mit dem hier als Lenkhebel ausgebildeten Lenkelement 12a der Rad-Drehanordnung 11a des ersten Fahrwerks 10a über eine Längsspurstange 13a und mit dem Lenkelement 12a der benachbart liegenden Rad-Drehanordnung 11a über eine weitere Längsspurstange 13a verbunden ist. In entsprechender Art und Weise greift der ebenfalls mit seinem kolbenseitigen Ende am zweiten Fahrgestellteil 4b angelenkte Lenkzylinder 40b an einer zweiten Seite des Lenkelements 14a der Lenkeinheit 14 und über eine Längsspurstange 13b am Lenkelement 12b des Fahrwerks 10a` an. In entsprechender Art und Weise greifen die dritten und vierten Lenkzylinder 40c und 40d mit ihren ringseitigen Enden an jeweils einer Seite eines hier als Lenkplatte ausgebildeten Lenkelements 14b einer weiteren Lenkeinheit 14' an den Lenkelementen 12a bzw. 12b der Rad-Drehanordnungen 11a bzw. 11b der zweiten Fahrwerke 10b, 10b' an.

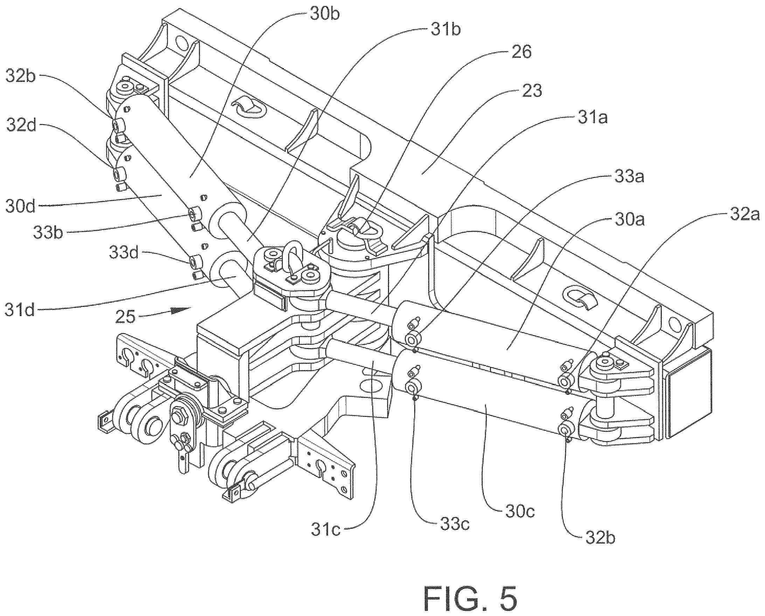

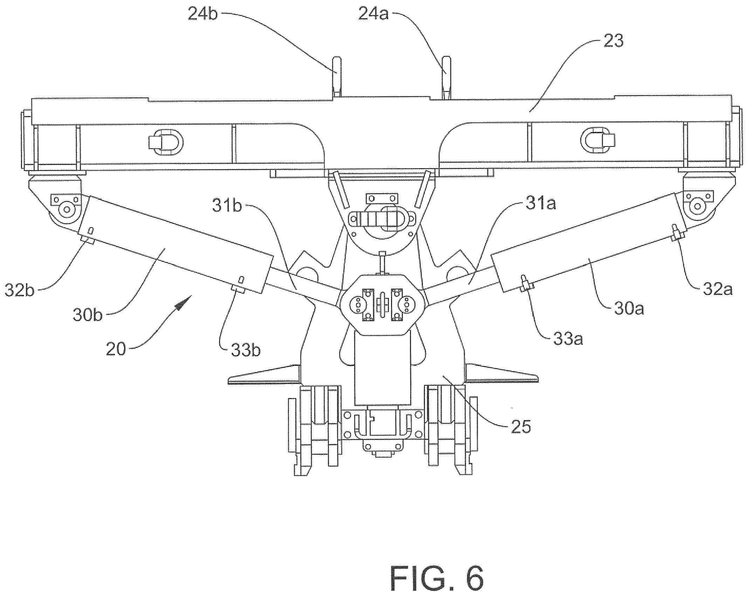

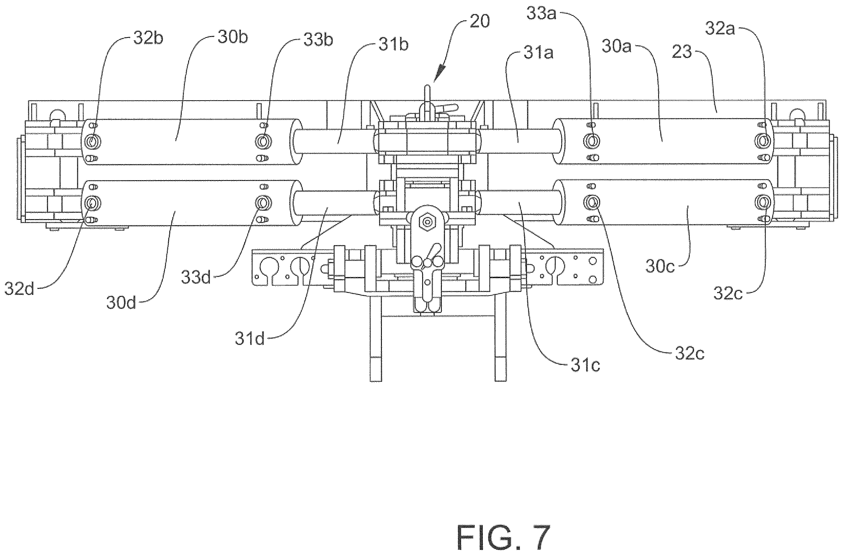

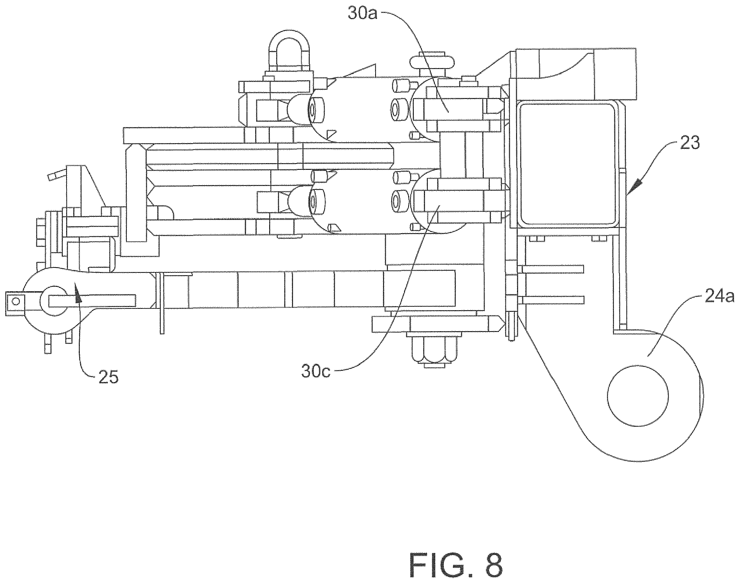

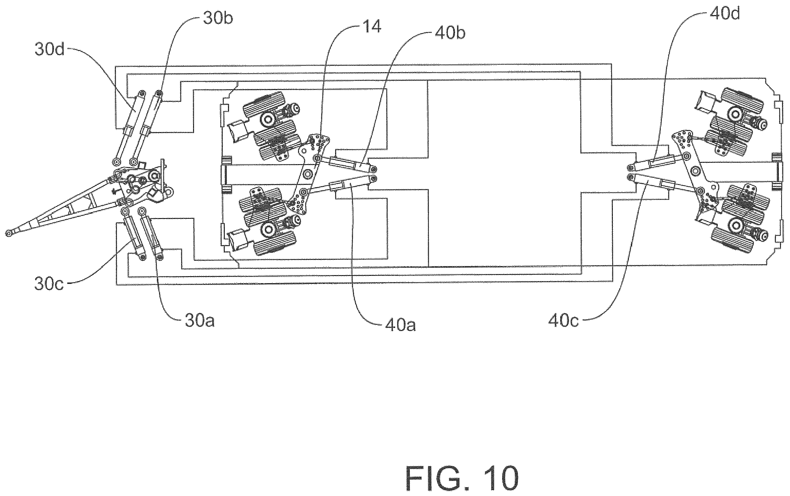

Die Ansteuerung dieser Lenkzylinder 40a-40d erfolgt nun durch die Steuerzylinder 30a-30d der Kupplungsvorrichtung 20, welche in den Figuren 5 bis 8 dargestellt ist. Die Kupplungsvorrichtung 20 weist einen Querbalken 23 auf, welcher über zwei Kupplungselemente 24a und 24b am Fahrgestell 3 befestigbar ist. Des Weiteren ist eine an und für sich bekannte und daher nicht mehr näher beschriebene Kupplungseinrichtung 25 vorgesehen, an welcher die Zuggabel 21 befestigbar und entlang eines Gelenks 26 verschwenkbar ist. Der erste Steuerzylinder 30a ist kolbenseitig am Querbalken 23 angelenkt und greift mit seiner Kolbenstange 31a an der Kupplungseinrichtung 25 an. In entsprechender Art und Weise ist der zweite Steuerzylinder 30b mit seinem kolbenseitigen Ende wiederum am Querbalken 23 angelenkt und seine Kolbenstange 31b ist mit der Kupplungseinrichtung 25 gelenkig verbunden. Die weiteren Steuerzylinder 30c und 30d greifen wiederum mit ihren kolbenseitigen Enden am Querbalken 24 an und ihre Kolbenstangen 31c und 31d sind an der Kupplungseinrichtung 25 angelenkt. Jeder Steuerzylinder 30a-30d weist eine kolbenseitige Anschlussöffnung 32a-32d und eine ringseitige Anschlussöffnung 33a-33d auf, an welcher die in den Figuren 9 bis 11 gezeigte Hydraulikleitungen angeschlossen sind, die wie nachstehend beschrieben zu den Lenkzylindern 40a-40d verlaufen: In Figur 9 ist eine erste Variante dargestellt, welche sich dadurch auszeichnet, dass die Fahrwerke 10a, 10a' der ersten Achslinie sowie die mit diesen über Längsspurstangen 13a, 13b gekoppelten weiteren Fahrwerke 10 und die Fahrwerke 10b, 10b' sowie die mit diesen Fahrwerken 10b, 10b' über die zweiten Längsspurstangen 13a', 13b' gekoppelten Fahrwerke 10 - wie aus der Figur 10 ersichtlich - in gegenläufigen Drehrichtungen ausgelenkt werden. Die kolbenseitige Anschlussöffnung 32a des ersten Steuerzylinders 30a ist über eine Hydraulikleitung 35a mit einer kolbenseitigen Anschlussöffnung 42a Lenkzylinders 40a verbunden. In entsprechender Art und Weise ist die kolbenseitige Anschlussöffnung 32b des zweiten Steuerzylinders 30b über eine Hydraulikleitung 35b mit einer kolbenseitigen Anschlussöffnung 42b des Lenkzylinders 40b verbunden. Die ringseitige Anschlussöffnung 33a bzw. 33b des ersten bzw. des zweiten Steuerzylinders 30a bzw. 30b ist mit einer ringseitigen Anschlussöffnung 43a bzw. 43b des Lenkzylinders 40a bzw. 40b über eine Hydraulikleitung 36a bzw. 36b verbunden. In entsprechender Art und Weise sind die kolbenseitigen Anschlussöffnungen 32c und 32d der Steuerzylinder 30c und 30d über Hydraulikleitungen 35c, 35d mit kolbenseitigen Anschlussöffnungen 42c, 42d der Lenkzylinder 40c und 40d der Fahrwerke 10b bzw. 10b' verbunden. Die ringseitigen Anschlussöffnungen 33c bzw. 33d der Steuerzylinder 30c bzw. 30d sind über Hydraulikleitungen 36c bzw. 36d mit den ringseitigen Anschlussöffnungen 43c, 43d der Lenkzylinder 40c, 40d verbunden.

Wird nun die Zuggabel 21 - wie in den Figuren 3 und 4 gezeigt - von ihrer mittleren, neutralen Position (siehe Figur 3) in ihre in Fahrtrichtung gesehen linke Position (siehe Figur 4) ausgelenkt, so werden die Kolbenstangen 31a und 31c der Steuerzylinder 30a und 30c eingefahren, so dass ein in den Hydraulikleitungen 35a bzw. 35c fließendes Hydraulikmedium aus den kolbenseitigen Anschlussöffnungen 32a bzw. 32c austritt und jeweils über eine entsprechenden Hydraulikleitung 35a bzw. 35c zu den kolbenseitigen Anschlussöffnungen 42a bzw. 42c der Lenkzylinder 40a bzw. 40c strömt. Dies bewirkt, dass die Kolbenstangen 41 der Lenkzylinder 40a bzw. 40c ausgefahren werden, so dass die Rad-Drehanordnung 11a des Fahrwerks 10a und somit die Rad-Drehanordnungen 11 a' des Fahrwerks 10a' zweiten Fahrgestellteils 4b - wie aus den Figuren 4 und 10 ersichtlich - entgegen dem Uhrzeigersinn gedreht werden. Gleichzeitig strömt Hydraulikmedium über die ringseitigen Anschlussöffnungen 33a und 33c der Lenkzylinder 40a und 40c über entsprechende Hydraulikleitungen zurück zu den ringseitigen Anschlussöffnungen 33a bzw. 33c des ersten bzw. des dritten Steuerzylinders 30a bzw. 30c.

Die Kolbenstangen 41 der Lenkzylinder 40b und 40d werden - wie aus einem Vergleich der Figuren 9 und 10 ersichtlich ist - eingefahren. Die Rad-Drehanordnungen 11b und 11b' der Fahrwerke 10b und 10b' schwenken somit in Uhrzeigersinn, also gegenteilig zur Drehrichtung der Fahrwerke 10a und 10a'.

Da - wie vorstehend beschrieben - eine erste Gruppe von Fahrwerken 10 über Längsspurstangen 13a, 13a' mit den Lenkelementen der Fahrwerke 10a, 10a' verbunden sind, so schwenken auch die Fahrwerke 10 dieser ersten Gruppe von Fahrwerken 10 gleichsinnig mit der Schwenk- und somit Lenkbewegung der Fahrwerke 10a, 10a'. Dies gilt in entsprechender Art und Weise die einer zweiten Gruppe von Fahrwerken 10 zuzuordnenden Fahrwerke 10, welche über Längsspurstangen 13b, 13b' mit den Fahrwerken 10b, 10b` verbunden sind.

Wird nun die Zuggabel 21 in ihre entgegengesetzte Richtung, also in Fahrtrichtung gesehen nach rechts, verschwenkt, so kehren sich die Strömungsverhältnisse in entsprechender Art und Weise um. Dies ist dem Fachmann klar ersichtlich und muss daher nicht mehr näher beschrieben werden.

Bei dem beschriebenen Transportfahrzeug 1 ist also vorgesehen, dass für jedes Paar von zusammenwirkenden Steuerzylindern und Lenkzylindern 30a, 40a bzw. 30b, 40b eines ersten Lenkkreises bzw. 30c, 40c bzw. 30d, 40d eines zweiten Lenkkreises ausgebildet werden. Dies besitzt den Vorteil, dass hierdurch gegenüber den aus dem Stand der Technik bekannten Transportfahrzeugen erhöhte Lenkkräfte in einfacher Art und Weise erreicht werden können.

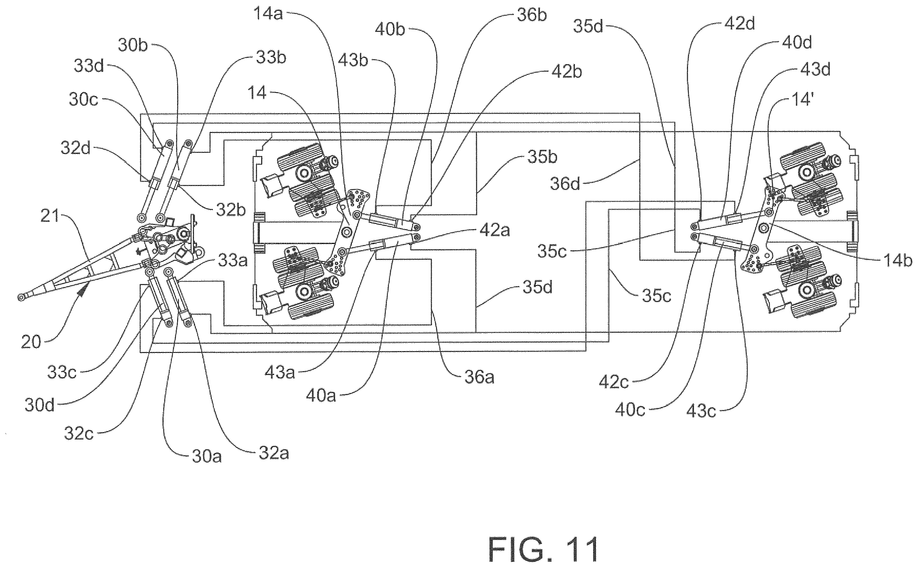

In Figur 11 ist eine zweite Variante der Ausbildung der beiden Lenkkreise des Transportfahrzeugs 1 dargestellt. Wie aus dieser Figur ersichtlich, wird durch die nachstehend beschriebene Ausbildung der Lenkkreise erreicht, dass sich die Fahrwerke 10 der ersten Gruppe von Fahrwerken, also diejenigen Fahrwerke 10, welche über Längsspurstangen 13a, 13b mit den aktiv gelenkten Fahrwerken 10a, 10a' verbunden sind, und die zweite Gruppe von Fahrwerke 10, also diejenigen Fahrwerke 10, welche mit den aktiv gelenkten Fahrwerken 10b, 10b` über Längsspurstangen 13a', 13b' verbunden sind, bei einer Schwenkbewegung der Zuggabel 21 gleichsinnig ausgelenkt werden.

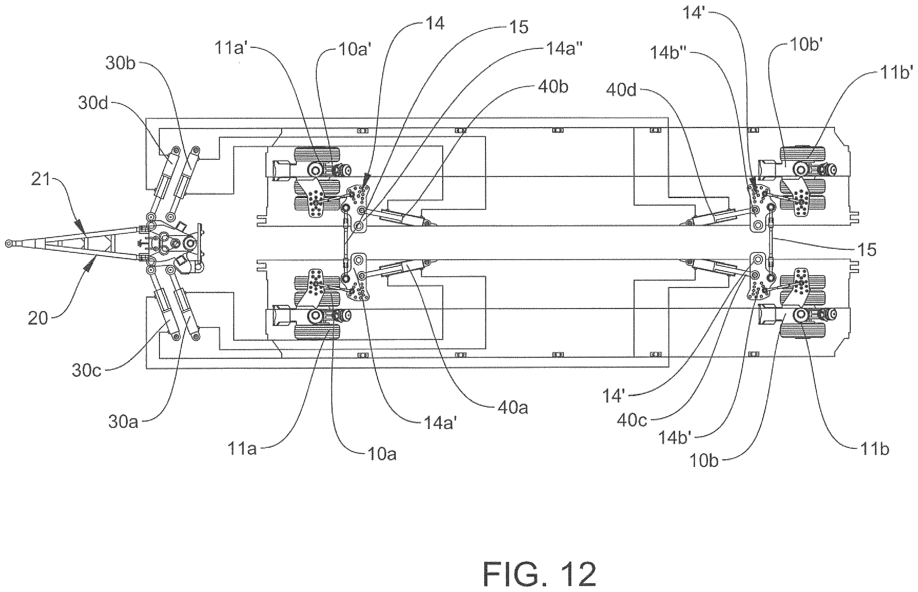

Wie aus Figur 11 ersichtlich ist, entspricht die Führung der Hydraulikleitungen des ersten Lenkkreises derjenigen der in den Figuren 9 und 10 dargestellten ersten Variante. Bei der zweiten Variante gemäß Figur 12 ist dann die Leitungsführung der Hydraulikleitungen des zweiten Lenkkreises "gespiegelt": Die von den Steuerzylindern 30c, 30d abgehenden Hydraulikleitungen werden nun nicht zu den auf der gleichen Seite des Transportfahrzeugs 1 angeordneten Lenkzylindern 40c bzw. 40d geleitet. Die Hydraulikleitungen des Steuerzylinder 30c werden zu den entsprechenden Öffnungen des Lenkzylinders 40d und die Hydraulikleitungen des Steuerzylinders 30c zu dem Lenkzylinder 40c geleitet.

Die Figur 12 zeigt nun eine besonders vorteilhafte Ausgestaltung der als Lenkplatten ausgebildeten Lenkelemente 14a bzw. 14b der ersten bzw. der zweiten Lenkeinheit 14 bzw. 14', welche eine einfache Verstellung der Breite des Transportfahrzeugs 1 ermöglicht. Es ist vorgesehen, dass die Lenkelemente 14a und 14b nicht - wie bei der schematischen Darstellungen der Figuren 9 bis 11 - einteilig ausgeführt sind, sondern dass die Lenkelemente 14a bzw. 14b jeweils zwei separate Lenkelement-Teile 14a', 14a" bzw. 14b`, 14b" aufweisen, die jeweils durch eine Querspurstange 15 verbunden sind. Durch eine einfache Änderung der Länge der Querspurstangen 15 kann die Breite des Transportfahrzeugs 1 und folglich die Spurweite einfach verstellt werden.

Bei der vorstehend beschriebenen Beschreibung wird davon ausgegangen, dass das Transportfahrzeug 1 in seiner Breite und seiner Spurweite variabel ist, indem die beiden Fahrgestellteile 4a und 4b in Querrichtung zueinander verschoben werden können. Dem Fachmann ist aus vorstehender Beschreibung aber ersichtlich, dass die beschriebene Lenkung nicht nur bei Transportfahrzeugen 1 mit variabler Breite einsetzbar ist.

Zusammenfassend ist festzuhalten, dass durch die beschriebenen Maßnahmen eine insbesondere für Transportfahrzeuge mit variabler Breite geeignete, aber nicht darauf beschränkte Lenkvorrichtung für ein Transportfahrzeug 1 mit mindestens zwei aktiven Lenkkreisen geschaffen wird, welche sich dadurch auszeichnet, dass in einfacher Art und Weise eine erhöhte Lenkkraft erzielt wird. Dies wird in vorteilhafter Art und Weise einfach dadurch erreicht, dass für jeden aktiven Lenkkreis, also sowohl für die Fahrwerke 10a, 10a' als auch für die Fahrwerke 10b, 10b` jeweils ein separater Hydraulikkreislauf ausgebildet ist. Dies wird dadurch erreicht, indem ein Paar von zusammenwirkenden Steuerzylindern 30a und 30b sowie 30c und 30d nur ein Paar von zusammenwirkenden Lenkzylindern 40a und 40b sowie 40c und 40d mit Hydraulikfluid beaufschlagen.

## Patentansprüche

1. Transportfahrzeug, welches ein Fahrgestell (3) mit mindestens zwei aktiven Lenkachsen (10a, 10b) besitzt, wobei das Fahrgestell (3) mindestens zwei Fahrgestellteile (4a, 4b) umfasst, die jeweils eine Reihe von hintereinander angeordneten Fahrwerken (10a, 10b; 10a`, 10b`) jeweils mit mindestens einer Rad-Drehanordnung (11a, 11b; 11a', 11b') tragen, welche vorzugsweise quer zu einer vertikalen Längsmittelebene des Transportfahrzeugs (1) verstellbar sind, wobei an einer Querseite des Transportfahrzeugs (1) eine Kupplungsvorrichtung (20) mit einem in der Kupplungsvorrichtung (20) um eine Achse schwenkbar gelagerten Kupplungselemente (21) angeordnet ist, durch welche das Transportfahrzeug (1) an ein dieses bewegendes Zug- oder Schubfahrzeug ankoppelbar ist, **dadurch gekennzeichnet, dass** die Kupplungsvorrichtung (20) mindestens vier Steuerzylinder (30a-30d) besitzt, wobei mindestens zwei Steuerzylinder (30a, 30c) mit ihrem ringseitigen Ende über Kolbenstangen (31a, 31c) an einer ersten Seite des verschwenkbaren Kupplungselements (21) und mit ihrem kolbenseitigen Ende mit der Kupplungsvorrichtung (20) und mindestens zwei Steuerzylinder (30b, 30d) mit ihrem ringseitigen Ende über Kolbenstangen (31b, 31d) mit einer zweiten Seite des verschwenkbaren Kupplungselements (21) und mit ihrem kolbenseitigen Ende mit der Kupplungsvorrichtung (20) verbunden sind, dass die beiden ersten Fahrwerke (10a, 10a`) und die beiden zweiten Fahrwerke (10b, 10b`) jeweils einen Lenkzylinder (40a, 40b; 40c, 40d) besitzen, wobei jeweils ein erster Lenkzylinder (40a bzw. 40c) an einer ersten Rad-Drehanordnung (11a bzw. 11b) und ein zweiter Lenkzylinder (40b bzw. 40d) jeweils an einer zweiten Rad-Drehanordnung (11a' bzw. 11b') angreifen, derart, dass jeweils ein kolbenseitiges Ende des entsprechenden Lenkzylinders (40a-40d) mit dem Fahrgestell (3) verbunden ist und ein ringseitiges Ende über eine entsprechende Kolbenstange (41) auf eine Lenkeinheit (14 bzw. 14') des entsprechenden Paars von Rad-Drehanordnung (11a, 11 a', bzw. 11b, 11b') einwirkt, und dass jeweils eine kolbenseitige Anschlussöffnung (32a-32d) eines Steuerzylinders (30a-30d) mit einer kolbenseitigen Anschlussöffnung (42a-42d) des diesem Steuerzylinder (30a-30d) zugeordneten Lenkzylinders (40a-40d) und eine ringseitige Anschlussöffnung (43a-43d) dieses Lenkzylinders (40a-40d) mit einer ringseitigen Anschlussöffnung (33a-33d) dieses Steuerzylinders (30a-30d) über entsprechende Hydraulikleitungen (35a-35d, 36a-36d) verbunden ist.

2. Transportfahrzeug nach Anspruch 1, **dadurch gekennzeichnet, dass** mindestens ein an einer ersten Seite des Fahrgestells (3) angeordneter Steuerzylinder (30a, 30c; 30b, 30d) mit einem an der gleichen Seite des Fahrgestells (3) angeordneten Lenkzylinder (40a, 40c; 40b, 40d) hydraulisch verbunden ist.

3. Transportfahrzeug nach einem der vorangehenden Ansprüche, **dadurch gekennzeichnet, dass** mindestens ein Lenkelement (12a; 12b) einer Reihe von Rad-Drehanordnungen (11a; 11b) über eine Längsspurstange (13a; 13b) mit einer Rad-Drehanordnung (11a; 11b) eines weiteren Fahrwerks (10) verbunden ist.

4. Transportfahrzeug nach einem der vorangehenden Ansprüche, **dadurch gekennzeichnet, dass** die ersten Fahrwerke (10a, 10a`) die vordere oder eine der vorderen Achslinien und/oder die zweiten Fahrwerke (10b, 10b`) die hintere oder eine der hinteren Achslinien des Fahrgestells (3) des Transportfahrzeugs (1) ist.

5. Transportfahrzeug nach einem der vorangehenden Ansprüche, **dadurch gekennzeichnet, dass** das Transportfahrzeug (1) eine erste Gruppe von Fahrwerken (10) aufweist, die über Längsspurstangen (13a, 13b) mit den ersten Fahrwerken (10a, 10a`) miteinander verbunden sind, und/oder dass das Transportfahrzeug (1) eine zweite Gruppe von Fahrwerken (10) aufweist, die über weitere Längsspurstangen (13a', 13b') mit den zweiten Fahrwerken (10b, 10b`) verbunden sind.

6. Transportfahrzeug nach einem der vorangehenden Ansprüche, **dadurch gekennzeichnet, dass** mindestens ein weiteres Lenkelement (14a, 14b) vorgesehen ist, an welchem die Kolbenstange (41) eines Lenkzylinders (40a-40d) angreift, und dass mindestens zwei Rad-Drehanordnungen (11a; 11b) über mindestens zwei Längsspurstangen (13a; 13b) mit dem weiteren Lenkelement (14a; 14b) verbunden sind.

7. Transportfahrzeug nach einem der vorangehenden Ansprüche, **dadurch gekennzeichnet, dass** die Kupplungsvorrichtung (20) abnehmbar an dem Fahrgestell (3) angeordnet ist.

8. Transportfahrzeug nach einem der vorangehenden Ansprüche, **dadurch gekennzeichnet, dass** das Transportfahrzeug (1) ein erstes Fahrzeugmodul (2a) und mindestens ein mit diesem mechanisch gekoppeltes zweites Fahrzeugmodul (2b) aufweist, und dass mindestens zwei Fahrwerke (10a, 10a`) im ersten Fahrzeugmodul (2a) und mindestens zwei Fahrwerke (10b, 10b`) im zweiten Fahrzeugmodul (2b) angeordnet ist.

9. Transportfahrzeug nach einem der vorangehenden Ansprüche, **dadurch gekennzeichnet, dass** das Transportfahrzeug (1) in seiner Breite und/oder seiner Spurweite variierbar ausgebildet ist.

10. Transportfahrzeug nach Anspruch 9, **dadurch gekennzeichnet, dass** das erste Fahrgestellteil (4a) und das zweite Fahrgestellteil (4b) des Transportfahrzeugs (1) in ihrem Abstand zueinander veränderbar sind.

## Claims

1. Transport vehicle which has a chassis (3) having at least two active steering axles (10a, 10b), wherein the chassis (3) comprises at least two chassis portions (4a, 4b), which each carry a row of running gears (10a, 10b; 10a', 10b') which are arranged one behind the other and which each have at least one wheel rotation arrangement (11a, 11b; 11a', 11b') which can preferably be adjusted transversely relative to a vertical longitudinal centre plane of the transport vehicle (1), wherein at a transverse side of the transport vehicle (1) a coupling apparatus (20) having a coupling element (21) which is supported so as to be able to be pivoted about an axis in the coupling apparatus (20) and by means of which the transport vehicle (1) can be coupled to a towing or pushing vehicle which moves it, **characterised in that** the coupling apparatus (20) has at least four control cylinders (30a-30d), wherein at least two control cylinders (30a, 30c) are connected with the ring-side end thereof by means of piston rods (31a, 31c) at a first side of the pivotable coupling element (21) and with the piston-side end thereof to the coupling apparatus (20) and at least two control cylinders (30b, 30d) are connected to the ring-side end thereof by means of piston rods (31b, 31d) with a second side of the pivotable coupling element (21) and with the piston-side end thereof to the coupling apparatus (20), **in that** the two first running gears (10a, 10a') and the two second running gears (10b, 10b') each have a steering cylinder (40a, 40b; 40c, 40d), wherein a first steering cylinder (40a or 40c) engages on a first wheel rotation arrangement (11a or 11b) and a second steering cylinder (40b or 40d) engages on a second wheel rotation arrangement (11a' or 11b') in such a manner that a piston-side end of the corresponding steering cylinder (40a-40d) is connected to the chassis (3) and a ring-side end via a corresponding piston rod (41) acts on a steering unit (14 or 14') of the corresponding pair of wheel rotation arrangements (11a, 11a', or 11b, 11b') and **in that** a piston-side connection opening (32a-32d) of a control cylinder (30a-30d) is connected to a piston-side connection opening (42a-42d) of the steering cylinder (40a-40d) which is associated with this control cylinder (30a-30d) and a ring-side connection opening (43a-43d) of this steering cylinder (40a-40d) is connected to a ring-side connection opening (33a-33d) of this control cylinder (30a-30d) via corresponding hydraulic lines (35a-35d, 36a-36d).

2. Transport vehicle according to claim 1, **characterised in that** at least one control cylinder (30a, 30c; 30b, 30d) which is arranged at a first side of the chassis (3) is hydraulically connected to a steering cylinder (40a, 40c; 40b, 40d) which is arranged at the same side of the chassis (3) .

3. Transport vehicle according to any one of the preceding claims, **characterised in that** at least one steering element (12a; 12b) of a series of wheel rotation arrangements (11a; 11b) is connected by means of a longitudinal tie rod (13a; 13b) to a wheel rotation arrangement (11a; 11b) of another running gear (10).

4. Transport vehicle according to any one of the preceding claims, **characterised in that** the first running gears (10a, 10a') are the front or one of the front axle lines and/or the second running gears (10b, 10b') are the rear or one of the rear axle lines of the chassis (3) of the transport vehicle (1) .

5. Transport vehicle according to any one of the preceding claims, **characterised in that** the transport vehicle (1) has a first group of running gears (10) which are connected by means of longitudinal tie rods (13a, 13b) to the first running gears (10), and/or **in that** the transport vehicle (1) has a second group of running gears (10) which are connected to the second running gears (10b, 10b') by means of additional longitudinal tie rods (13a', 13b').

6. Transport vehicle according to any one of the preceding claims, **characterised in that** at least one additional steering element (14a, 14b) with which the piston rod (41) of a steering cylinder (40a-40d) engages is provided and **in that** at least two wheel rotation arrangements (11a; 11b) are connected to the additional steering element (14a; 14b) by means of at least two longitudinal tie rods (13a; 13b).

7. Transport vehicle according to any one of the preceding claims, **characterised in that** the coupling apparatus (20) is removably arranged on the chassis (3).

8. Transport vehicle according to any one of the preceding claims, **characterised in that** the transport vehicle (1) has a first vehicle module (2a) and at least one second vehicle module (2b) which is mechanically coupled thereto, and **in that** at least two running gears (10, 10a') are arranged in the first vehicle module (2a) and at least two running gears (10b, 10b') are arranged in the second vehicle module (2b).

9. Transport vehicle according to any one of the preceding claims, **characterised in that** the transport vehicle (1) is constructed so as to be able to be varied in terms of its width and/or track width.

10. Transport vehicle according to claim 9, **characterised in that** the first chassis portion (4a) and the second chassis portion (4b) of the transport vehicle (1) can be changed in terms of the spacing thereof with respect to each other.

## Revendications

1. Véhicule de transport, qui comprend un châssis (3) avec au moins deux essieux directeurs actifs (10a, 10b), dans lequel le châssis (3) comprend au moins deux parties de châssis (4a, 4b), qui supportent chacun une série de trains de roulement (10a, 10b ; 10a', 10b'), disposés les uns derrière les autres, chacun avec au moins un dispositif de rotation de roue (11a, 11b ; 11a', 11b'), qui peuvent être déplacés de préférence transversalement par rapport à un plan central longitudinal vertical du véhicule de transport (1), dans lequel, sur une face transversale du véhicule de transport (1), est disposé un dispositif de couplage (20) avec un élément de couplage (21) logé de manière pivotante autour d'un axe dans le dispositif de couplage (20), grâce auquel le véhicule de transport (1) peut être couplé à un véhicule de traction ou de poussée qui le déplace, **caractérisé en ce que** le dispositif de couplage (20) comprend au moins quatre vérins de commande (30a - 30d), dans lequel au moins deux vérins de commande (30a, 30c) sont reliés, avec leur extrémité côté bague, par l'intermédiaire de tiges de pistons (31a, 31c), à un premier côté de l'élément de couplage pivotant (21) et, avec leur extrémité côté piston, avec le dispositif de couplage (20), et au moins deux vérins de commande (30b, 30d) sont reliés, avec leur extrémité côté bague, par l'intermédiaire de tiges de pistons (31b, 31d), avec un deuxième côté de l'élément de couplage pivotant (21) et, avec leur extrémité côté piston, avec le dispositif de couplage (20), **en ce que** les deux premiers trains de roulement (10a, 10a') et les deux deuxièmes trains de roulement (10b, 10b') comprennent respectivement un vérin de direction (40a, 40b ; 40c, 40d), dans lequel, respectivement, un premier vérin de direction (40a respectivement 40c) s'emboîte avec un premier dispositif de rotation de roue (11a respectivement 11b) et un deuxième vérin de direction (40b respectivement 40d) s'emboîte avec un deuxième dispositif de rotation de roue (11a' respectivement 11b'), de sorte que respectivement une extrémité côté piston du vérin de direction (40a - 40d) correspondant est reliée avec le châssis (3) et une extrémité côté bague agit, par l'intermédiaire d'une tige de piston (41) correspondante, sur une unité de direction (14 respectivement 14') de la paire correspondante de dispositifs de rotation de roue (11a, 11a' respectivement 11b, 11b') et que respectivement une ouverture de raccordement côté piston (32a - 32d) d'un vérin de commande (30a - 30d) est reliée avec une ouverture de raccordement (42a - 42d) du vérin de direction (40a - 40d) correspondant à ce vérin de commande (30a - 30d) et une ouverture de raccordement côté bague (43a - 43d) de ce vérin de direction (40a - 40d) est reliée avec une ouverture de raccordement côté bague (33a - 33d) de ce vérin de commande (30a - 30d) par l'intermédiaire de conduites hydrauliques (35a - 35d, 36a - 36d) correspondantes.

2. Véhicule de transport selon la revendication 1, **caractérisé en ce qu'**au moins un vérin de commande (30a, 30c ; 30b, 30d), disposé sur un premier côté du châssis (3), est relié hydrauliquement avec un vérin de direction (40a, 40c ; 40b, 40d) disposé sur le même côté du châssis (3).

3. Véhicule de transport selon l'une des revendications précédentes, **caractérisé en ce qu'**au moins un élément de direction (12a ; 12b) d'une série de dispositifs de rotation de roue (11a ; 11b) est relié, par l'intermédiaire d'une tige d'accouplement longitudinale (13a ; 13b), avec un dispositif de rotation de roue (11a ; 11b) d'un autre train de roulement (10).

4. Véhicule de transport selon l'une des revendications précédentes, **caractérisé en ce que** les premiers trains de roulement (10a, 10a') sont la ligne axiale avant ou une des lignes axiales avant et/ou les deuxièmes trains de roulement (10b, 10b') sont la ligne axiale arrière ou une des lignes axiales arrière du châssis (3) du véhicule de transport (1).

5. Véhicule de transport selon l'une des revendications précédentes, **caractérisé en ce que** le véhicule de transport (1) comprend un premier groupe de trains de roulement (10) qui sont reliés entre eux, par l'intermédiaire de tiges d'accouplement longitudinales (13a, 13b) avec les premiers trains de roulement (10a, 10a') et/ou **en ce que** le véhicule de transport (1) comprend un deuxième groupe de trains de roulement (10), qui sont reliés par l'intermédiaire d'autres tiges d'accouplement longitudinales (13a', 13b'), avec les deuxièmes trains de roulement (10b, 10b').

6. Véhicule de transport selon l'une des revendications précédentes, **caractérisé en ce qu'**au moins un autre élément de direction (14a, 14b) est prévu, sur lequel s'emboîte la tige de piston (41) d'un vérin de direction (40a - 40d) et **en ce qu'**au moins deux dispositifs de rotation de roue (11a; 11b) sont reliés, par l'intermédiaire d'au moins deux tiges d'accouplement longitudinales (13a ; 13b), avec l'autre élément de direction (14a ; 14b).

7. Véhicule de transport selon l'une des revendications précédentes, **caractérisé en ce que** le dispositif de couplage (20) est disposé de manière amovible sur le châssis (3).

8. Véhicule de transport selon l'une des revendications précédentes, **caractérisé en ce que** le véhicule de transport (1) comprend un premier module de véhicule (2a) et au moins un deuxième module de véhicule (2b), couplé mécaniquement avec celui-ci et **en ce qu'**au moins deux trains de roulement (10a, 10a') sont disposés dans le premier module de véhicule (2a) et au moins deux trains de roulement (10b, 10b') sont disposés dans le deuxième module de véhicule (2b).

9. Véhicule de transport selon l'une des revendications précédentes, **caractérisé en ce que** le véhicule de transport (1) est réalisé avec une largeur et/ou un écartement variable.

10. Véhicule de transport selon la revendication 9, **caractérisé en ce que** la distance entre la première partie de châssis (4a) et la deuxième partie de châssis (4b) du véhicule de transport (1) est variable.
